## Europäisches Patentamt

## European Patent Office

## Office européen des brevets

(19)

(11) Veröffentlichungsnummer: **0 103 110**
**B1**

(12) # EUROPÄISCHE PATENTSCHRIFT

(45) Veröffentlichungstag der Patentschrift:
23.09.87

(51) Int. Cl.⁴: **B 01 F 1/00,** B 01 F 15/04,
A 46 B 11/06

(21) Anmeldenummer: **83107047.9**

(22) Anmeldetag: **19.07.83**

(54) Beimischgerät.

(30) Priorität: **19.06.82 DE 3230783**

(43) Veröffentlichungstag der Anmeldung:
**21.03.84 Patentblatt 84/12**

(45) Bekanntmachung des Hinweises auf die Patenterteilung:
**23.09.87 Patentblatt 87/39**

(84) Benannte Vertragsstaaten:
**AT BE CH DE FR GB IT LI LU NL SE**

(56) Entgegenhaltungen:
**GB-A-688 488**
**GB-A-1 383 121**
**US-A-2 419 845**

(73) Patentinhaber: **GARDENA Kress + Kastner GmbH, Lichternseestrasse 40 Postfach 27 47, D-7900 Ulm (Donau) (DE)**

(72) Erfinder: **Katzer, Johann, Nebelhornweg 9, D-7910 Neu- Ulm (DE)**
Erfinder: **Lopic, Franz, Sperberweg 10, D-7911 Nersingen (DE)**
Erfinder: **Sauer, Roland, Gersterstrasse 41, D-7900 Ulm- Gögglingen (DE)**
Erfinder: **Stephany, Christian, Biberacher Strasse 76, D-7900 Ulm- Wiblingen (DE)**

(74) Vertreter: **Patentanwälte Ruff und Beier, Neckarstrasse 50, D-7000 Stuttgart 1 (DE)**

LIBER, STOCKHOLM 1987

EP 0 103 110 B1

## Beschreibung

Die Erfindung betrifft ein Beimischgerät zur Abgabe von in Feststoffform vorliegenden Zusatzstoffen an strömende Flüssigkeiten, mit einem Flüssigkeitseinlaß, einem Flüssigkeitsauslaß und einer Aufnahme für den als Hohlzylinder-Tablette ausgebildeten Zusatzstoff, wobei die Aufnahme für die Tablette ein mit dem Flüssigkeitseinlaß verbindbares Rohr aufweist, das sich bei eingesetzter Tablette durch die Längsbohrung des Hohlzylinders mit radialen Abstand erstreckt und dessen Ende auf der dem Flüssigkeitsauslaß aus der Tablettenaufnahme entgegengesetzten Seite der Tablette angeordnet ist.

Es ist bereits eine Vorrichtung zum Beimischen eines durch eine Flüssigkeit abtragbaren festen Stoffes zu der Flüssigkeit bekannt (DE-A-25 24 146). Hierbei hat der feste Zusatzstoff die Form eines Stabes und ist verschiebbar gelagert, so daß nur seine Stirnfläche vom Wasser umspült werden kann, damit die Beimischung des Zusatzstoffes zeitlich konstant bleibt. Die verschiebbare Lagerung des Zusatzstoffes ist jedoch von Nachteil. Entweder wird das Spiel groß gemacht, um die Verschiebung leicht bewerkstelligen zu können, was dazu führt, daß auch an den Mantelflächen des Stabes das Wasser angreifen kann. Oder das Spiel wird klein gemacht, was dazu führt, daß man eine Feder Oder eine sonstige Beaufschlagung des Stabes benutzen muß.

Es ist ebenfalls ein Beimischgerät zum Beimischen von in fester Form vorhandenem Zusatzstoff in eine Flüssigkeit bekannt (US-A-2 419 845), bei dem der Zusatzstoff die Form eines Stabes mit einer Innenbohrung aufweist, die ggf. den Stab vollständig durchsetzen kann. Hierbei ist die Außenseite des stabförmigen Zusatzstoffes und seine Unterseite mit einer gegenüber der Flüssigkeit resistenten Beschichtung versehen, so daß eine Abtragung des Zusatzstoffes nur an den Bohrungsflächen auftreten kann. Da sich mit zunehmender Abtragung der Durchmesser und damit auch die Fläche vergrößert, nimmt mit steigender Lebensdauer die abgegebene Menge ständig zu, was zu einer nicht konstanten Abgabe führt. Das in das Innere des Zusatzstoffes ragende Rohr hat ein geschlossenes Ende.

Der Erfindung liegt die Aufgabe zugrunde, ein möglichst einfach aufgebautes Beimischgerät der eingangs genannten Art zu schaffen, mit dessen Hilfe es möglich ist, eine möglichst genaue Dosierung an Zusatzstoffen in der austretenden Flüssigkeit auch über längere Zeiträume zu erreichen.

Zur Lösung dieser Aufgabe schlägt die Erfindung ein Beimischgerät der eingangs genannten Art vor, bei dem das Rohr die Tablette durchsetzt und dessen Ende offen ist, wobei die Flüssigkeit gleichzeitig an der inneren und äußeren Mantelfläche der Tablette vorbeiströmt.

Diese Umströmung des Hohlzylinders hat den großen Vorteil, daß bei Abtragung gleichzeitig eine Verkleinerung der äußeren Oberfläche und eine Vergrößerung der inneren Oberfläche auftritt, so daß praktisch über die gesamte Lebensdauer der Hohlzylindertablette ihre Oberfläche konstant bleibt. Dies führt zu einer ebenfalls konstanten Zusatzstoffabgabe. Darüberhinaus sind die Abmessungen der Hohlzylindertablette nicht kritisch und eine Verschiebung der Hohlzylindertablette ist nicht erforderlich.

Mit Hilfe des Rohres wird die Flüssigkeit zur jeweils anderen Seite der Tablette gebracht, so daß beide Flüssigkeitsströme in gleicher Richtung die äußere und innere Mantelfläche überstreichen. Dies führt dazu, daß die Abnutzung der Tablette an den Stirnflächen kleiner ist als an den Mantelflächen, so daß sie auch im wesentlichen ihre Länge beibehält.

Nach einem weiteren Merkmal der Erfindung kann vorgesehen sein, daß die Flüssigkeitseinleitung in das Innenrohr der Zusatzstoffaufnahme und die Flüssigkeitsentnahme aus ihr auf derselben Seite der Aufnahme erfolgen. Dies macht nicht nur einen besonders kompakten Aufbau des Beimischgerätes möglich, sondern erleichtert auch das Auswechseln bzw. Ergänzen der Hohlzylindertablette von der anderen Seite her.

Besonders günstig ist es, wenn die Zusatzstoffaufnahme von einem auswechselbaren Behälter gebildet ist.

Um eine besonders gute gleichmäßige Strömung zu erzielen, kann vorgesehen sein, daß die Tablettenaufnahme im Bereich des Austrittsendes des Innenrohres eine Verwirbelungseinrichtung für die aus diesem austretende Flüssigkeit aufweist. Diese Verwirbelungseinrichtung sorgt dafür, daß die Strömung gleichmäßig an der Außenfläche und der Innenfläche des Hohlzylinders vorbeistreicht.

Wenn die Aufnahme von einem auswechselbaren Behälter gebildet ist, ist diese Verwirbelungseinrichtung vorzugsweise einstückig am Boden des Behälters angeordnet.

Zum Auswechseln kann ebenfalls ein großbehälter vorgesehen sein, der gegen den Normalbehälter ausgewechselt werden. Er dient dazu, beispielsweise größere, d. h. längere, Hohlzylindertabletten aufzunehmen. Es ist ebenfalls möglich, mehrere normal große Hohlzylindertabletten in diesen Großbehälter einzusetzen. Dabei kann vorgesehen sein, daß der Großbehälter ein Verlängerungs-Innenrohr aufweist. Dieses Verlängerungs-Innenrohr ist dann in Verlängerung des normalen Innenrohres angeordnet. Dies macht es möglich, den Großbehälter zusammen mit dem normalen Beimischgerät zu verwenden. Dabei kann das Innenrohr mit dem Verlängerungs-Innenrohr beispielsweise verschraubbar sein. Besonders günstig ist es jedoch, wenn die Verbindung zwischen dem Verlängerungs-Innenrohr und dem Innenrohr ein Ausströmen ermöglicht. Es wird mit anderen Worten eine beabsichtigte Undichtigkeit an der Verbindungsstelle geschaffen. Dies kann im einfachsten Fall dadurch geschehen, daß das Innenrohr und das Verlängerungs-Innenrohr in zusammengesetztem Zustand einen gewissen Abstand voneinander aufweisen, so daß ein Ringspalt entsteht. Diese beabsichtigte Undichtigkeit verbessert die Strömungsverhältnisse an der Innenseite der Hohlzylindertablette.

Es kann unter Umständen günstig sein, wenn das Verlängerungs-Innenrohr mindestens eine Ausströmöffnung aufweist.

Nach einem weiteren Merkmal der Erfindung kann das Beimischgerät ein Ventil enthalten. Mit Hilfe dieses Ventils kann es möglich sein, entweder die Flüssigkeitsströmung durch das Beimischgerät vollständig zu unterbinden oder aber zwischen einem Durchströmen unter Zusatzstoffabgabe und einem Durchströmen ohne Beimischung umzuschalten. Dies ist besonders dann günstig, wenn das Beimischgerät beispielsweise für Fußbodenpflegesysteme verwendet wird, wo zunächst ein Reinigen mit einem beigemischten Reinigungsstoff und anschließend ein Spülen mit klarem Wasser erfolgen soll.

Besonders günstig ist es, wenn die Zusatzstoffaufnahme im Nebenstrom durchströmt wird.

Die Erfindung schlägt weiterhin vor, daß das Beimischgerät mit einem Handgriff verbindbar ist. Dieser Handgriff kann beispielsweise ein Teil der Wasserzuleitung sein, beispielsweise auch mit einem Sperrventil versehen sein. Es kann sich dabei sowohl um eine Steckverbindung als auch um eine Schraubverbindung handeln.

Besonders günstig ist es, wenn das Beimischgerät mit Zusatzgeräten verbindbar ist. Auch hier kann eine Schraub- oder Steckverbindung vorgesehen sein. Je nach der gewünschten Anwendung läßt sich also das Beimischgerät mit den entsprechenden Zusatzgeräten verbinden.

Das erfindungsgemäß Beimischgerät ist insbesondere als Teil eines Fußbodenpflegesystems von Vorteil. Hier kommt es für eine schnelle und schonende Reinigung auf eine genaue Dosierung an Zusatzstoffen und auf die Möglichkeit, anschließend mit klarem Wasser nachzuspülen, an. Dies wird durch das von der Erfindung vorgeschlagene Beimischgerät besonders begünstigt.

Ebenfalls vorgesehen ist das Beimischgerät nach der Erfindung als Teil eines Autopflegesystems. Hier müssen dem Waschwasser Seifen- oder Wachszusätze zugesetzt werden, wobei es in beiden Fällen ebenfalls auf die genaue Dosierung ankommt.

Besonders günstig jedoch ist das Beimischgerät als Teil eines Düngesystems zu verwenden. Hierbei kommt es ebenfalls auf die möglichst exakte Dosierung des beigemischten Düngers an.

Ebenfalls verwendbar ist das Beimischgerät als Teil eines Fensterputzsystems.

Die Erfindung sieht ebenfalls vor, daß das Beimischgerät eine in die Zusatzstoffaufnahme eingesetzte Hohlzylinder-Tablette aufweist. Besonders günstig ist die Form eines Kreiszylinders.

Weitere Merkmale, Einzelheiten und Vorzüge der Erfindung ergeben sich aus den Ansprüchen, der folgenden Beschreibung einer bevorzugten Ausführungsform sowie anhand der Zeichnung.

Hierbei zeigen:

Fig. 1 eine teilweise geschnittene Seitenansicht eines Beimischgerätes mit einem Handgriff;

Fig. 2 eine vergrößerte Ansicht eines Teils des Beimischgerätes nach Fig. 1;

Fig. 3 einen vergrößerten Teilschnitt etwa nach der Linie III-III in Fig. 1;

Fig. 4 einen Schnitt nach der Linie IV-IV in Fig. 2 bei abgesperrtem Ventil;

Fig. 5 einen der Fig. 4 entsprechenden Schnitt bei geänderter Ventilstellung;

Fig. 6 einen der Fig. 4 entsprechenden Schnitt in weiterer Stellung des Ventils;

Fig. 7 einen Schnitt nach Linie VII-VII in Fig. 1;

Fig. 8 einen der Fig. 1 entsprechenden Schnitt durch ein Beimischgerät mit angesetztem Großbehälter.

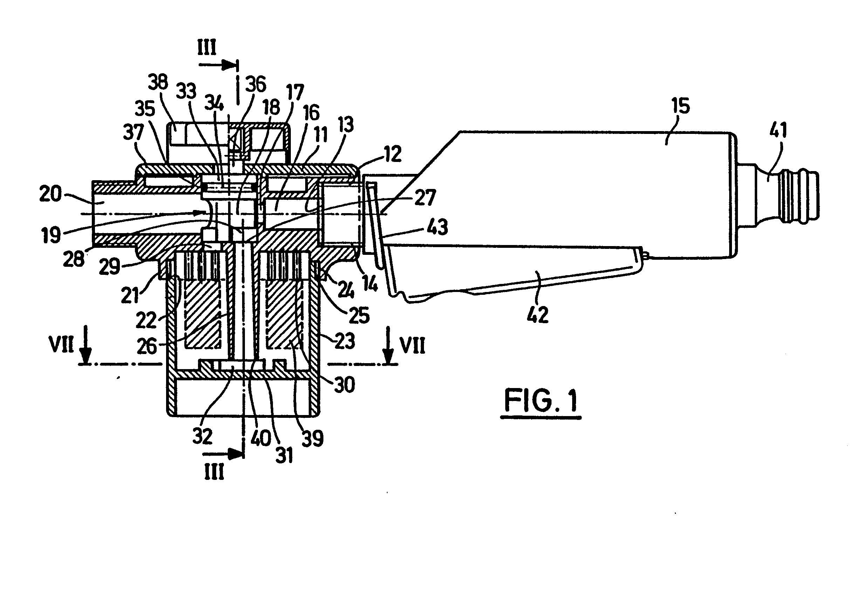

Das Beimischgerät nach Fig. 1 enthält ein Gehäuseoberteil 11, das rechts eine mit einem Gewinde 12 versehene Bohrung 13 aufweist. Diese Bohrung 13 dient zum Anschluß einer Wasserzuleitung, im dargestellten Beispiel ist in das Gewinde 12 der Bohrung 13 das Außengewinde 14 eines Handgriffs 15 eingeschraubt. Von der Bohrung 13 aus fuhrt eine Bohrung verringerten Durchmessers 16 radial nach innen und endet in einer Durchgangsbohrung 17 mit nochmals verringertem Durchmesser. An die Bohrung 17 schließt sich der Ventilkörper 18 eines Ventils 19 an.

In Verlängerung der Bohrung 16 ist eine Bohrung 20 angeordnet, die den Wasserauslauf darstellt.

An der Unterseite des Gehäuseoberteils 11 ist eine umlaufende Rippe 21 angeordnet, die ein Innengewinde 22 aufweist. In das Innengewinde 22 ist ein Behälter 23 eingeschraubt, der etwa kreiszylindrische Form besitzt und an seiner Oberkante mit einem Außengewinde 24 versehen ist. Zum Abdichten ist eine Dichtung 25 zwischen den Gewinden 22 und 24 angeordnet.

Ebenfalls an der Unterseite des Gehäuseoberteils 11 ist zentral innerhalb der Rippe 21 ein Innenrohr 26 angeordnet, dessen obere Öffnung 27 im dargestellten Fall von einer Schulter 28 des Ventilkörpers 18 verschlossen ist.

In Fig. 1 links neben dem Innenrohr besitzt das Gehäuseoberteil eine weitere Bohrung 29, die von der Unterseite des Gehäuseoberteils 11 in die Bohrung 20 führt.

Um das Obere Ende des Innenrohrs 26 herum sind mehrere zylindrische stabartige Vorsprünge 30 angeordnet, die zwischen sich Zwischenräume bilden, aus denen Flüssigkeit durch die Bohrung 29 austreten kann.

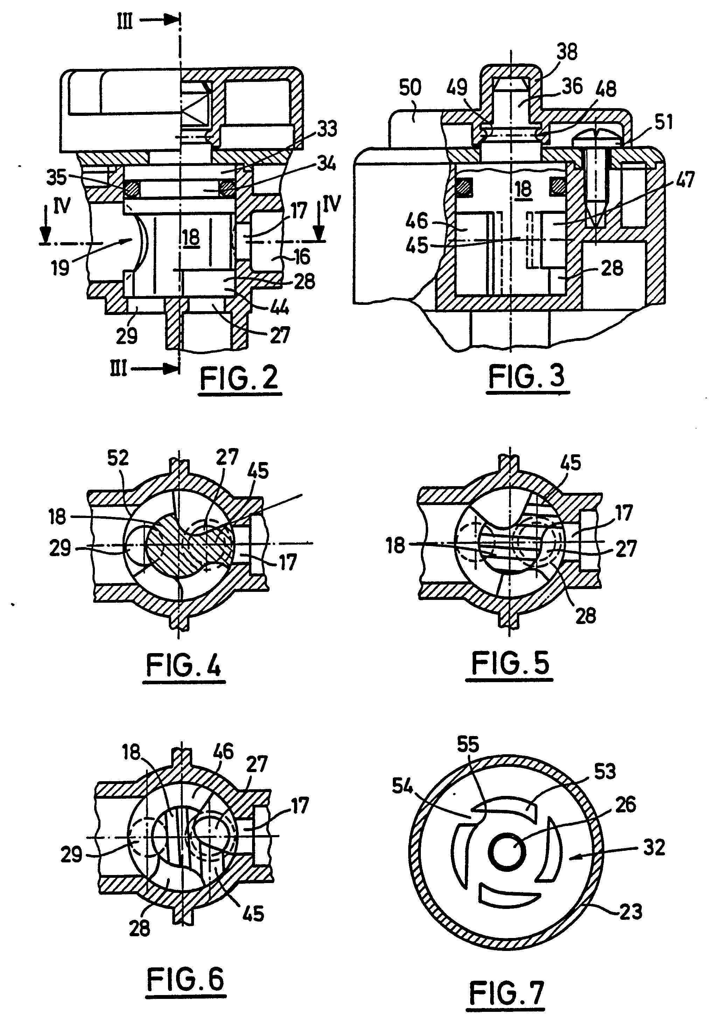

Der Behälter 23 weist einen Boden 31 auf, wobei das Innenrohr 26 bei eingeschraubtem Behälter 23 bis kurz über den Boden 31 reicht. Auf dem Boden ist eine im einzelnen aus Fig. 7 hervorgehende Verwirbelungseinrichtung 32 einstückig angeformt.

Der Ventilkörper 18 besitzt einen oberen zylindrischen Teil 33 mit einer Ringnut 34, in der ein Dichtring 35 angeordnet ist. Mit Hilfe dieses Dichtrings 35 ist der Ventilkörper 18 gegenüber dem Gehäuse abgedichtet. An seiner Oberseite besitzt der Ventilkörper 18 einen Ansatz 36, der durch den Deckel 37 des Gehäuseoberteils hindurch ragt und dort in eine Ausnehmung eines Knebelgriffes 38 eingreift. Mit Hilfe des Knebelgriffes 38 läßt sich der Ventilkörper 18 um seine in Fig. 1 von oben nach unten verlaufende Längsachse drehen.

In das Innere des Behälters 23 ist eine Zusatzstofftablette 39, die in gestrichelten Linien dargestellt ist, eingesetzt. Sie besitzt die Form eines Hohlzylinders, wobei sich das Innenrohr 26 durch die Längsbohrung des Hohlzylinders erstreckt. Die Maße der Tablette 39 sind so gewählt, daß ihr Innendurchmesser größer ist als der Außendurchmesser des Innenrohres 26, und daß ihr Außendurchmesser kleiner ist als der Innendurchmesser des Behälters 23. Daher ist sowohl zwischen dem Innenrohr 26 und der Tablette 39, als auch zwischen der Tablette 39 und dem Behälter 23 ein Zwischenraum vorhanden.

Bei entsprechender Stellung des Ventilkörpers 18, siehe beispielsweise Fig. 6, gelangt Wasser durch die Bohrung 16, die Öffnung 17 und die obere Öffnung 27 des Innenrohres 26 in das Innenrohr, strömt dort an dessen Austrittsende 40 aus dem Rohr aus und wird durch die Verwirbelungseinrichtung 32 verwirbelt. Ein Teil der Strömung gelangt durch den Zwischenraum zwischen dem Rohr 26 und der Tablette 39 nach Oben, während der andere Teil an der Außenseite der Tablette 39 nach oben gelangt. Zwischen den Vorsprüngen 30 kann das Wasser, das nunmehr gelöste Zusatzstoffe enthält, durch die Bohrung 29 in die Bohrung 20 gelangen, von wo aus es aus dem Beimischgerät austreten kann.

Die Vorsprünge 30 dienen also dazu, zu verhindern, daß die Tablette 39 mit ihrer Stirnfläche die Bohrung 29 verschließt. Statt dieser Vorsprünge 30 könnten auch andere Einrichtungen zu diesem Zweck vorhanden sein.

Da die Strömung also sowohl an der Außenfläche, als auch an der Innenfläche der hohlzylinderförmigen Tablette 39 entlang streift, wird eine durch das Abtragen von Zusatzstoff bewirkte Verringerung der äußeren Oberfläche durch eine gleichzeitig auftretende Vergrößerung der inneren Oberfläche kompensiert. Damit wird ein konstanter Anteil von Zusatzstoff am austretenden Wasser erreicht.

An das Beimischgerät nach Fig. 1 ist rechts ein Handgriff 15 angeschraubt. Dieser Handgriff 15 besitzt an seiner äußeren Seite einen Nippel 41 zum Anschluß eines Wasserschlauches oder eines weiteren Gerätes. An seiner Unterseite besitzt der Handgriff 15 eine Taste 42, mit deren Hilfe die Strömungsmenge des Wasser durch den Handgriff 15 in das Beimischgerät abgestellt und auch reguliert werden kann. Die Taste 42 ist mit Hilfe eines Drahtbügels 43 in geöffneter Stellung arretierbar. Auch bei unterschiedlicher Strömungsmenge ist der Anteil des Zusatzstoffes immer konstant.

Fig. 2 zeigt in vergrößertem Maßstab Einzelheiten des Ventiles 19. Der Ventilkörper 18 ist mit seinem oberen zylindrischen Teil 33 und seinem unteren Teil 44 in jeweils einer zylindrischen Ausnehmung gelagert, so daß er sich leicht um seine Längsachse drehen läßt. Ebenfalls ist aus Fig. 2 zu sehen, daß die obere Öffnung 27 des Innenrohres 26 von der Schulter 28 des Ventilkörpers verschlossen ist. Die Bohrung 29 braucht nicht verschlossen zu sein, da ein Abschließen der Öffnung 27 einen Durchfluß durch den Behälter verhindert.

Fig. 3 zeigt den Ventilkörper 18 aus der Richtung der Auslaßöffnung 20. Hier ist die Schulter 28 besonders deutlich zu sehen. Es ist ebenfalls zu sehen, daß der Ventilkörper 18 einen mittleren Teil 45 besitzt, der in Fig. 3 rechts und links von Durchgängen 46, 47 begrenzt ist. Ebenfalls ist zu sehen, daß der Griff 38 auf den Ansatz 36 des Ventilkörpers 18 aufgesetzt ist und mit einem Ringwulst 48 in eine Ringnut 49 eingreift. Der Griff 38 besitzt einen unteren flanschartigen Teil 50, der die Befestigungsschraube 51 für den Deckel 37 abdeckt.

Aus Fig. 4 ist die Stellung des Ventilkörpers 18 im einzelnen zu sehen. Es ist ebenfalls zu sehen, daß der Außenumfang 52 des Ventilkörpers 18 Kreiszylinderform aufweist. In der in Fig. 4 dargestellten Stellung liegt der mittlere Teil 45 des Ventilkörpers 18 vor der Öffnung 17, so daß die Öffnung 17 vollständig verschlossen ist. Es kann daher kein Wasser durch das Beimischgerät hindurchtreten.

In Fig. 6 ist der Ventilkörper 18 gegenüber der Stellung nach Fig. 4 im Gegenuhrzeigersinn so weit verdreht, daß der mittlere Teil 45 des Ventilkörpers die Einlaßöffnung 17 freigibt. Die Schulter 28, siehe Fig. 3, deckt jedoch die Einlaßöffnung 27 für das Innenrohr 26 ab, so daß Wasser durch die Öffnung 17 und den Durchgang 47 an dem mittleren Teil 45 des Ventilkörpers 18 vorbei bis zur Bohrung 20 gelangen kann, von wo aus es das Beimischgerät verläßt. In der in Fig. 5 dargestellten Stellung des Ventilkörpers 18 findet also keine Beimischung statt.

Fig. 6 zeigt die Stellung des Ventilkörpers 18, wenn dieser gegenüber seiner Stellung in Fig. 4 im Uhrzeigersinn verdreht ist. Der mittlere Teil 45 gibt nunmehr die Einlaßöffnung 17 ebenfalls frei, wobei in diesem Fall die obere Öffnung 27 des Innenrohres 26 frei ist. Das Wasser kann daher durch die Öffnung 27 in das Innenrohr 26 und von dort durch den Behälter 23 bis zur Bohrung 29 gelangen, von wo aus es in den Wasseraustritt 20 gelangen kann. Gleichzeitig ist durch den Durchgang 46 eine direkte Verbindung zwischen der Einlaßöffnung 17 und dem Wasseraustritt 20 gegeben, so daß ein Teil des Wassers direkt durch das Beimischgerät hindurch tritt. Der Behälter wird daher im Nebenstrom durchströmt.

Aus Fig. 7 ist die Verwirbelungseinrichtung 32 zu sehen. Sie besteht aus vier etwa keilförmigen Ansätzen 53, zwischen denen etwa spiralförmig verlaufende Durchgänge 54 angeordnet sind. Das aus dem Austrittsende 40 des Innenrohrs 26 austretende Wasser wird in einen Drall im Gegenuhrzeigersinn versetzt, wobei die Kanten 55 der Ansätze 53 dafür sorgen, daß ein Teil der Wasserströmung innerhalb der Ansätze 53 bleibt.

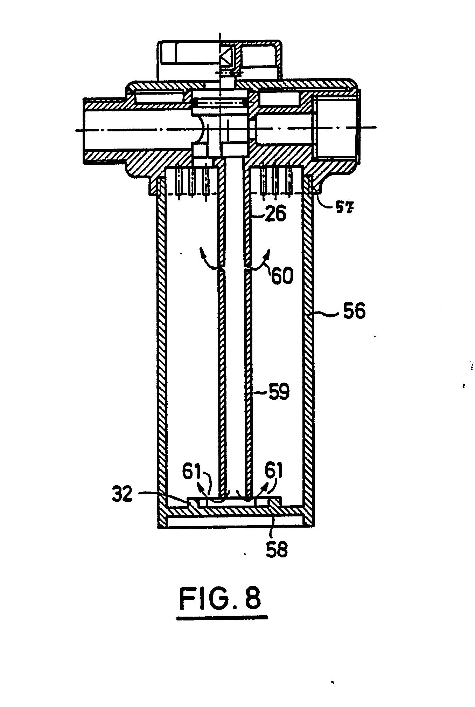

Fig. 8 zeigt im Seitenschnitt das Beimischgerät nach Fig. 1 mit einem angesetzten Großbehälter 56. Der Großbehälter 56 besitzt an seiner Oberseite ebenfalls ein Gewinde 57, das dem Gewinde 24 des Behälters 23 entspricht.

Der Großbehälter 56 besitzt einen Boden 58, der ebenfalls eine Verwirbelungseinrichtung 32 besitzt. Auf dem Boden ist ein Verlängerungsrohr 59 befestigt, das in axialer Verlängerung des Innenrohres 26 angeordnet ist. Im zusammengesetzten Zustand, wie er in Fig. 8 dargestellt ist, endet das Verlängerungsrohr 59 kurz vor dem unteren Ende des Innenrohres 26, so daß in Richtung der Pfeile 60 eine gewisse Strömung austreten kann. Das Verlängerungsrohr 59 besitzt im Bereich des Bodens 58 des Großbehälters 56 mehrere Öffnungen, durch die die Flüssigkeit in Richtung der Pfeile 61 austreten kann. Dabei tritt der größte Teil der Strömung am unteren Ende des Verlängerungsrohres 59 aus, während bei den Pfeilen 60 nur ein geringer Teil der Strömung austritt.

In den Großbehälter 56 lassen sich entweder mehrere der Tabletten 39 nach Fig. 1 oder aber eine große bzw. lange Tablette einsetzen. Die Strömung in Richtung der Pfeile 60 dient dazu, einen gleichmäßigeren Abtrag an der Innenfläche des Hohlzylinders zu ermöglichen.

Das Ventil 19 kann derart ausgebildet sein, daß es das Verhältnis zwischen der Flüssigkeitsmenge, die durch den Aufnahmebehälter geht, zu dem glatt durchgehenden Flüssigkeitsteil variieren kann. Dadurch läßt sich die Beimischung variieren. Natürlich läßt sich die Beimischung auch vollständig abschalten.

Das von der Erfindung vorgeschlagene Beimischgerät hat den großen Vorteil, daß sich an seinen Auslauf Zusatzgeräte sowohl mit freiem Auslauf als auch mit einem Gegendruck anschließen lassen. Das Vorhandensein des Gegendruckes beeinträchtigt die Wirkungsweise des Beimischgerätes nach der Erfindung im Gegensatz zu bekannten Geräten nicht. Es ist auch möglich, daß sogar das Zusatzgerät eine Abschalteinrichtung aufweist.

## Patentansprüche

1. Beimischgerät zur Abgabe von in Feststofform vorliegenden Zusatzstoffen an strömende Flüssigkeiten, mit einem Flüssigkeitseinlaß, einem Flüssigkeitsauslaß und einer Aufnahme für den als Hohlzylinder-Tablette (39) ausgebildeten Zusatzstoff, wobei die Aufnahme für die Tablette (39) ein mit dem Flüssigkeitseinlaß verbindbares Rohr (26) aufweist, das sich bei eingesetzter Tablette (39) durch die Längsbohrung des Hohlzylinders mit radialem Abstand erstreckt und dessen Ende (40) auf der dem Flüssigkeitsauslaß aus der Tablettenaufnahme entgegengesetzten Seite der Tablette (39) angeordnet ist, dadurch gekennzeichnet, daß das Rohr (26) die Tablette (39) durchsetzt und dessen Ende (40) offen ist, wobei die Flüssigkeit gleichzeitig an der inneren und der äußeren Mantelfläche der Tablette (39) vorbeiströmt.

2. Beimischgerät nach Anspruch 1, dadurch gekennzeichnet, daß der Flüssigkeitseinlaß in das Innenrohr (26) der Zusatzstoffaufnahme und der Flüssigkeitsauslaß aus dieser auf derselben Seite der Zusatzstoffaufnahme erfolgen.

3. Beimischgerät nach Anspruch 1 oder 2, dadurch gekennzeichnet, daß die Aufnahme von einem auswechselbaren Behälter (23, 56) gebildet ist.

4. Beimischgerät nach einem der vorhergehenden Ansprüche, dadurch gekennzeichnet, daß die Zusatzstoffaufnahme im Bereich des offenen Endes (40) des Innenrohres (26) eine Verwirbelungseinrichtung (32) für die aus dem Innenrohr (26) austretende Flüssigkeit aufweist.

5. Beimischgerät nach einem der vorhergehenden Ansprüche, dadurch gekennzeichnet, daß es ein Ventil (19) aufweist.

6. Beimischgerät nach einem der vorhergehenden Ansprüche, dadurch gekennzeichnet, daß die Zusatzstoffaufnahme im Nebenstrom durchströmt ist.

7. Beimischgerät nach einem der vorhergehenden ansprüche, dadurch gekennzeichnet, daß es mit einem Handgriff (15) lösbar verbunden ist.

8. Beimischgerät nach einem der vorhergehenden Ansprüche, dadurch gekennzeichnet, daß sein Auslaß mit Zusatzgeräten lösbar verbunden ist.

9. Beimischgerät nach einem der vorhergehenden Ansprüche, dadurch gekennzeichnet, daß es eine in der Zusatzstoffaufnahme eingesetzte Hohlzylinder-Tablette aufweist.

## Claims

1. Mixer for supplying additives present in solid form to flowing liquids, with a liquid inlet, a liquid outlet and a receptacle for the additive constructed in the form of a hollow cylindrical tablet (39), the receptacle for tablet (39) having a tube (26) connectable with the liquid inlet and which, with tablet (39) inserted, extends with radial spacing through the longitudinal bore of the hollow cylinder and whose end (40) is arranged on the side of tablet (39) opposite to the liquid outlet from the tablet receptacle, characterized in that tube (26) passes through the tablet (39) and its end (40) is open, the liquid simultaneously flowing past the inner and outer circumferential surface of tablet (39).

2. Mixer according to claim 1, characterized in that the liquid entry into inner tube (26) of the additive receptacle and the liquid outflow therefrom take place on the same side of the additive receptacle.

3. Mixer according to claims 1 or 2, characterized in that the receptacle is formed by an interchangeable container (23, 56).

4. Mixer according to one of the preceding claims, characterized in that the additive receptacle is provided in the vicinity of the open end (40) of inner tube (26) with a whirling up device (32) for the liquid passing out of inner tube (26).

5. Mixer according to one of the preceding claims, characterized in that it has a valve (19).

6. Mixer according to one of the preceding claims, characterized in that there is a secondary flow through the additive receptacle.

7. Mixer according to one of the preceding claims, characterized in that it is detachably connected to a handle (15).

8. Mixer according to one of the preceding claims, characterized in that its outlet is detachably connected to additional equipment.

9. Mixer according to one of the preceding claims, characterized in that it has a hollow cylindrical tablet inserted in the additive receptacle.

**Revendications**

1. Appareil mélangeur pour délivrer à des liquides en circulation des substances additionnelles se présentant sous forme solide, comprenant une admission de liquide, une sortie de liquide et un réceptacle pour la substance additionnelle réalisée sous la forme d'une pastille cylindrique creuse (39), le réceptacle de cette pastille (39) présentant un tube (26) qui peut être relié à l'admission de liquide et qui, lorsque la pastille (39) est incorporée, s'étend avec un espacement radial par le perçage longitudinal du cylindre creux, et dont l'extrémité (40) est disposée du côté de la pastille (39) opposé à la sortie de liquide hors du réceptacle à pastilles, caractérisé par le fait que le tube (26) traverse la pastille (39) de part en part et l'extrémité (40) de ce tube est ouverte, la circulation du liquide balayant simultanément les surfaces périphériques interne et externe de la pastille (39).

2. Appareil mélangeur selon la revendication 1, caractérisé par le fait que l'admission de liquide dans le tube interne (26) du réceptacle à substances additionnelles et la sortie de liquide hors de ce réceptacle ont lieu du même côté de ce réceptacle à substances additionnelles.

3. Appareil mélangeur selon la revendication 1 ou 2, caractérisé par le fait que le réceptacle est formé par un récipient interchangeable (23, 56).

4. Appareil mélangeur selon l'une des revendications précédentes, caractérisé par le fait que le réceptacle à substances additionnelles présente, au voisinage de l'extrémité ouverte (40) du tube interne (26), un dispositif (32) engendrant des tourbillons dans le liquide sortant du tube interne (26).

5. Appareil mélangeur selon l'une des revendications précédentes, caractérisé par le fait qu'il comporte une valve (19).

6. Appareil mélangeur selon l'une des revendications précédentes, caractérisé par le fait que le réceptacle à substances additionnelles est traversé par un flux auxiliaire.

7. Appareil mélangeur selon l'une des revendications précédentes, caractérisé par le fait qu'il est relié de manière démontable à une poignée (15).

8. Appareil mélangeur selon l'une des revendications précédentes, caractérisé par le fait que sa sortie est reliée à des appareils supplémentaires, avec faculté de dissociation.

9. Appareil mélangeur selon l'une des revendications précédentes, caractérisé par le fait qu'il présente une pastille cylindrique creuse incorporée dans le réceptacle à substances additionnelles.

FIG.1

FIG.2

FIG.3

FIG.4

FIG.5

FIG.6

FIG.7

3

## FIG. 8